# EUROPEAN PATENT APPLICATION

(11) **EP 4 799 922 A1**
(43) Date of publication of application: **02.09.2026**
(21) Application number: 26158103.7
(22) Date of filing: 12.02.2026
(51) Int. Cl.: B64C 9/02, B64D 45/00

(54) **HIGH LIFT SYSTEM ARCHITECTURE, ASSOCIATED HIGH LIFT SYSTEM, AIRCRAFT AND METHOD OF MONITORING A HIGH LIFT SYSTEM**

(30) Priority: 27.02.2025 DE 102025000719
(71) Applicant: Airbus Operations GmbH, 21129 Hamburg (DE)
(72) Inventor: Haserodt, Jan, 21129 Hamburg (DE)
(74) Representative: Airbus Germany

(57) **Abstract**

This high lift system architecture (22), comprises:
- a first rotational sensor (46), configured to be installed on a torque transmission arrangement (24) and to measure a first angular position (A1) of the torque transmission arrangement (24), at a first measurement point (M1);
- a second rotational sensor (48), configured to be installed on the torque transmission arrangement (24) and to measure a second angular position (A2) of the torque transmission arrangement (24), at a second measurement point (M2); and
- an actuation control device (50), comprising:
+ an acquisition module (56), configured for acquiring the first angular position (A1) from the first rotational sensor (46) and the second angular position (A2) from the second rotational sensor (48), and
+ a determination module (58), configured for determining a torque (T) applied to the torque transmission arrangement (24) as a function of said acquired first (A1) and second (A2) angular positions.

## Description

The present disclosure relates to a high lift system architecture. The present disclosure further relates to a high lift system for an aircraft comprising such a high lift system architecture. This disclosure also relates to an aircraft comprising such a high lift system. This disclosure further relates to a method of monitoring a high lift system as above mentioned.

In the domain of high lift systems for aircrafts, one knows using architectures, for example for ensuring that loads and displacements values in the high lift system remain nominal.

One knows for example high lift system architectures comprising a torque sensor and an actuation control device, configured for transmitting the torque measured by the torque sensor to the crew of the aircraft and/or to a flight computer of the aircraft. For example, the torque sensors of such architectures rely on magnetostriction.

In architectures, for example on arrangements relying on magnetostriction sensors, the accuracy of measurement generally decreases for high torques peaks. Furthermore, such architectures are generally can only be used for torque measurement.

An object of the present invention is therefore to provide a high lift system architecture which is accurate, even for high torque peaks, while being versatile.

To this end, the invention relates to a high lift system architecture, comprising:
- a first rotational sensor, configured to be installed on a torque transmission arrangement and to measure a first angular position of the torque transmission arrangement, at a first measurement point;
- a second rotational sensor, configured to be installed on the torque transmission arrangement and to measure a second angular position of the torque transmission arrangement, at a second measurement point; and
- an actuation control device, connected to the first and second rotational sensors, the actuation control device comprising:
   + an acquisition module, configured for acquiring the first angular position from the first rotational sensor and the second angular position from the second rotational sensor, and
   + a determination module, configured for determining a torque applied to the torque transmission arrangement as a function of said acquired first and second angular positions.

The use of a first and second rotational sensors in combination with the above presented determination module is especially advantageous since this allows, through measurement of differential angular displacement along the torque transmission arrangement, to obtain especially accurate torque values, even for high torques. Furthermore, such an arrangement is especially compact and the use of rotational sensors makes this arrangement versatile in that the sensors of such arrangements can also be used for monitoring the angular position of the torque transmission arrangement.

According to other advantageous aspects of the invention, the high lift system architecture comprises one or more of the following features taken alone or according to all technically possible combinations:
- the determination module is further configured for determining the torque applied to the torque transmission arrangement as a function of a distance between the first measurement point and the second measurement point;
- a distance between the first measurement point and the second measurement point is comprised between 0.01 m and 2 m;
- each of the first and second rotational sensor comprises:
   - a stator, configured for being fastened to a fixed structure of the high lift system; and
   - a rotor, facing the stator and configured for being fastened to the torque transmission arrangement;
- the determination module is further configured for determining a consolidated angular position of the torque transmission arrangement based on the first and/or second acquired angular position;
- the acquisition module is configured for determining a number of rotations from the measured first and second angular positions, the acquired first angular position including the number of rotations of the torque transmission arrangement at the first measurement point and the acquired second angular position including the number of rotations of the torque transmission arrangement at the second measurement point;
- the actuation control device comprises a first circuitry and a second circuitry, different from the first circuitry, at least one of the acquisition module and the determination module being redundant and implemented on both the first and the second circuitry;
- the actuation control device further comprises a control module, configured to be connected to a blocking element of the high lift system, the control module being configured for controlling the blocking element to block the torque transmission arrangement depending on the determined torque; and
- the high lift system further comprises a communication module, configured to be connected to human machine interface and/or a flight control computer, the communication module being configured for transmitting the determined torque to the human machine interface and/or flight control computer

The invention further relates to a high lift system for an aircraft, comprising a torque transmission arrangement and a high lift system architecture as presented above, wherein the first and second rotational sensors are installed on the torque transmission arrangement

According to other advantageous aspects of the invention, the high lift system comprises one or more of the following features taken alone or according to all technically possible combinations:
- the torque transmission arrangement comprises a transmission shaft, both the first and second rotational sensors being installed on the transmission shaft; and
- the torque transmission arrangement comprises an input shaft, an output shaft and a gear arrangement, cinematically connecting the input shaft and the output shaft, one of the first and second rotational sensors being installed on the input shaft and the other of the first and second rotational sensors being installed on the output shaft.

The invention further relates to an aircraft comprising a high lift system as above presented.

The invention further relates to a method of monitoring a high lift system with a high lift system architecture as above-mentioned, wherein the method comprises the steps of:
- acquiring a first angular position of the torque transmission arrangement from the first rotational sensor of the high lift system architecture;
- acquiring a second angular position of the torque transmission arrangement from the second rotational sensor of the high lift system architecture; and
- determining a torque applied to the torque transmission arrangement as a function of the acquired first and second angular positions.

The invention will be better understood when reading the following description, which is given solely by way of example and with reference to the appended drawings, in which:
- Figure 1 is a schematic view of an aircraft comprising a high lift systems with a high lift system architecture according to the invention;
- Figure 2 is a schematic representation of a high lift system architecture according to the invention; and
- Figures 3A, 3B and 3C are schematic representation of various high lift systems according to the invention, in which the high lift system architecture is installed on various torque transmission arrangements.

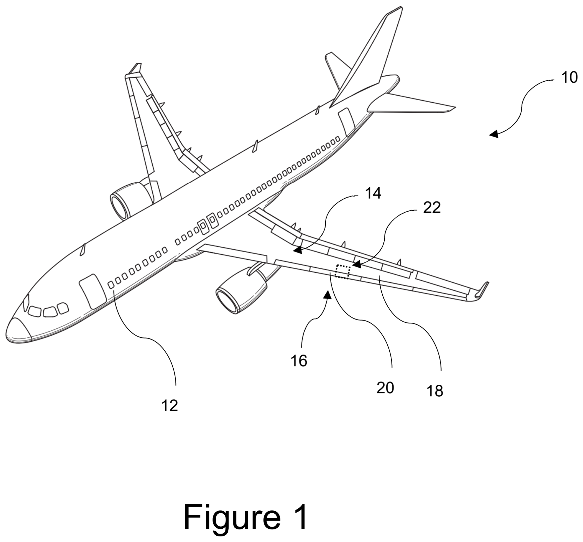

Referring to figure 1, an aircraft 10 comprises a fuselage 12 and wings 14.

The aircraft 10 is for example an airplane and is for example an airliner.

The aircraft 10 comprises a high lift system 16, for example arranged on the wings 14.

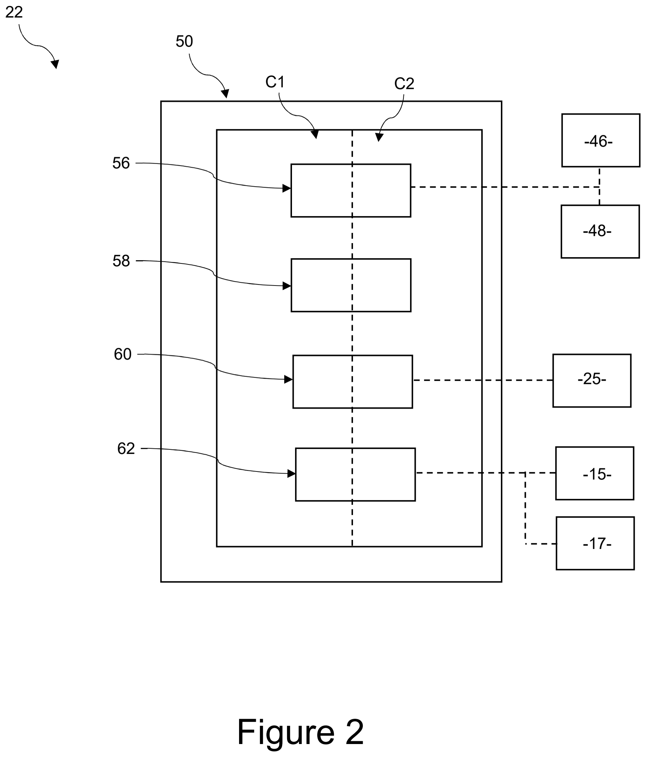

As illustrated in figure 2, the aircraft 10 comprises for example a Human Machine Interface 15 (abbreviated HMI) and/or a flight control computer 17 (abbreviated FCC).

The high lift system 16 comprises in particular a wing body 18, a moveable surface 20, a high lift system architecture 22 and a torque transmission arrangement 24. The high lift system further comprises for example a blocking element 25. In the example illustrated on figure 1, the high lift system 16 comprises a plurality of moveable surfaces 20.

As visible from figure 1, the wing body 18 is for example a portion of the wing 14 which is fixed relative to the fuselage 12. In a non-illustrated example, the main body 14 corresponds to a main body of a foldable wing tip.

For example, and as visible from figure 1, the moveable surface 20 is a slat. In other words, in such an example, the high lift system 16 forms a leading-edge high lift system/device.

In other non-illustrated examples, the moveable surface 20 is a flap. In such non illustrated examples, the high lift system 16 may form a trailing-edge high lift system/device.

The moveable surface 20 is moveable relative to the wing body 18. For example, the moveable surface 20 is moveable between a stowed position and a deployed position, the moveable surface 20 being further away from the wing body 18 when it is in its deployed position than when it is in its stowed position.

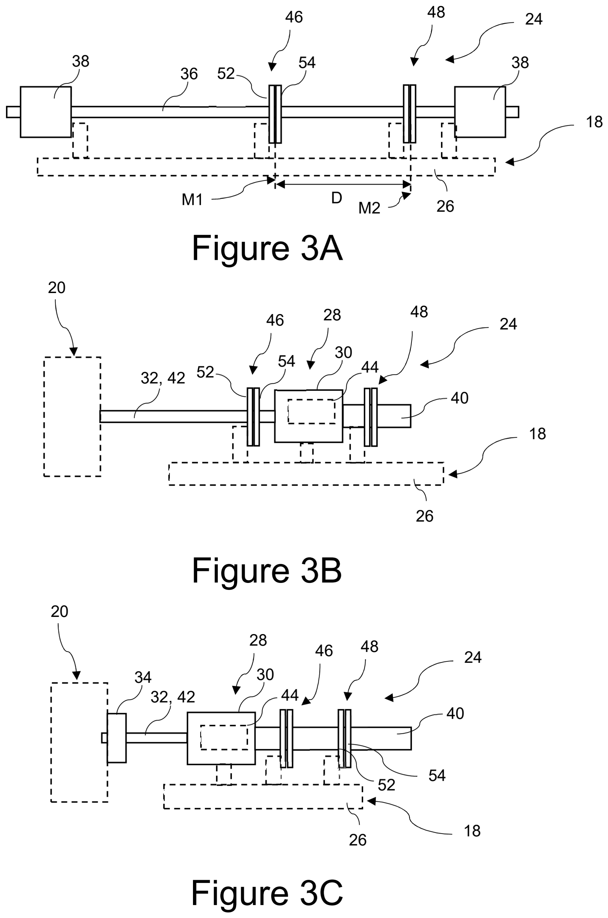

As illustrated in figures 3A to 3C, the high lift system 16 comprises a fixed structure 26.

The fixed structure 26 is for example fastened and/or fixed relative to the wing body 18. In an example, the fixed structure 26 is part of the wing body 18.

For example, the high lift system 16 comprises an actuator 28.

The actuator 28 is for example configured for moving the moveable surface 20 relative to the wing body 18 between its stowed and deployed positions.

In an example, the torque transmission arrangement 24 comprises such an actuator 28. In another example, the torque transmission arrangement 24 is connected, for example cinematically connected, to such an actuator 28.

In the example of figure 3A, the torque transmission arrangement 24 is for example connected to a non-represented actuator 28.

In the example of figures 3B and 3C, the torque transmission arrangement 24 comprises an actuator 28.

The actuator 28 is for example a Geared Rotary Actuator (generally abbreviated GRA), such as in the examples presented on figure 3B. In other examples the actuator is a linear actuator, such as presented in figure 3C.

When the actuator 28 is a Geared Rotary Actuator, the actuator 28 comprises for example a housing 30 which is for example fastened to the wing body 18 and a rotary element 32, which is for example configured to engage with a track (non-referenced) of the moveable surface 20.

When the actuator 28 is a linear actuator, the actuator 28 comprises for example a housing 30 which is for example fastened to the wing body 18 and a rotary element 32, which is for example configured to engage with a travelling nut 34 of the moveable surface 20.

As this will be presented in more details later, the blocking element 25 is for example configured for blocking the torque transmission arrangement 24.

The blocking element 25 is further for example configured for blocking the displacement of the moveable surface 20 relative to the wing body 18.

The blocking element 25 is for example a brake of the high lift system 16, and is for example a power of brake (generally abbreviated POB).

The torque transmission arrangement 24 is for example moveable, for example in rotation, relative to the wing body 18 and/or to the fixed structure 26 of the high lift system 16.

The torque transmission arrangement 24 is for example configured for transmitting a movement from a Power Control Unit (generally abbreviated PCU, not represented) of the high lift system 16, to the moveable surface 20.

For example, the torque transmission arrangement 24 is configured for transmitting a torque from the PCU to the actuator 28 and/or from the actuator 28 to the moveable surface 20.

In the example of figure 3A, the torque transmission arrangement 24 comprises a transmission shaft 36. The transmission shaft 36 is for example connected and/or guided to support stations 38 of the high lift system 16.

In the example of figures 3B and 3C, the torque transmission arrangement 24 comprises an input shaft 40, an output shaft 42 and a gear arrangement 44.

The gear arrangement 44 connects for example the input shaft 40 and the output shaft 42.

For example, and as above mentioned, the torque transmission arrangement 24 comprises an actuator 28. In such an example, the input 40 and output shafts 42 are for example input and output shafts of such an actuator 28, the gear arrangement 44 being a gear arrangement of such an actuator 28.

In such an example, and as above mentioned, one of the input 40 and output 42 shafts corresponds, or is connected, to the rotary element 32 of the actuator 28.

The high lift system architecture 22 comprises a first rotational sensor 46, a second rotational sensor 48 and an actuation control device 50.

As illustrated from figures 3A to 3C the first rotational sensor 46 and the second rotational sensor 48 are installed on the torque transmission arrangement 24.

Each the first 46 and second 48 rotational sensors is configured for measuring an angular position A of the torque transmission arrangement 24, at a measurement point M. The angular position A is for example an angular position of the torque transmission arrangement 24 relative to the fixed structure 26 and/or wing body 18, at the measurement point M. One understands that the measurement point M corresponds for example to a point/location of the torque transmission arrangement 24 where a respective rotational sensor 46, 48 is installed.

The first rotational sensor 46 is then configured for measuring a first angular position A1 of the torque transmission arrangement 24, at a first measurement point M1 and the second rotational sensor 48 is configured for measuring a second angular position A2 of the torque transmission arrangement 24, at a second measurement point M2 (M1 and M2 being referenced only on figure 3A for better readability).

In an example, the first A1 and/or second A2 measured angular position might include a number of rotations along with an angle formed between the torque transmission arrangement 24 and the fixed structure 26 and/or wing body 18. In another example, the first A1 and/or second A2 measured angular position only includes the angle formed between the torque transmission arrangement 24 and the fixed structure 26 and/or wing body 18.

In a non-illustrated example, and for example, the torque transmission arrangement 24 comprises a reduction element, for example configured to reduce the number of rotations of main portion of the torque transmission arrangement 24, such as the rotary element 32. In such an example, the first rotational sensor 46 and the second rotational sensor 48 are for example configured for measuring the first A1 and/or second A2 angular position after the reduction element, for example such that the angular position A1, A2 is always inferior to a full rotation even if the main portion of the torque transmission arrangement 24 performs more than one rotation.

A distance D between the first measurement point M1 and the second measurement point M2 (D being referenced only on figure 3A for better readability), or in other word, between the first rotational sensor 46 and the second rotational sensor 48, is for example comprised between 0.01m and 2m is for example comprised between 0.01 m and 1 m, for example between 0.05 m and 1m.

In the example presented in figure 3A, the first measurement point M1 and the second measurement points M2 are arranged on the transmission shaft 36. In other words, the first 46 and second 48 rotational sensors are installed on the transmission shaft 36.

For example, and as illustrated in the example of figure 3B, one of the first M1 and second M2 measurement points is arranged on the input shaft 40 and the other of the first M1 and second M2 measurement points is arranged on the output shaft 42. In other words, one of the first 46 and second 48 rotational sensors is installed on the input shaft 40 and the other of the first 46 and second rotational 48 sensors is installed on the output shaft 42.

In the example of figure 3C, both the first M1 and the second M2 measurement points are arranged on one of the input 40 and output 42 shafts. In other words, both the first 46 and second 48 rotational sensors are installed on one of the input 40 and output shaft 42. One understands for example that such an input 40 or output 42 shaft can form (or be considered as) a transmission shaft 36 as above mentioned.

As illustrated from figures 3A to 3C, each of the first 46 and second 48 rotational sensor comprises for example a stator 52 and a rotor 54.

The stator 52 is fastened to the fixed structure 26 of the high lift system 16.

The rotor 54 is facing the rotor and is fastened to the torque transmission arrangement 24.

One of the stator 52 and rotor 54, and for example the stator 54, is for example configured to form an antenna of the rotational sensor 46, 48. Such an antenna forms for example a disk radially arranged around the torque transmission arrangement 24, the antenna being extending along an orthoradial and circular sensing direction.

The other of the stator 52 and rotor 54, and for example the rotor 53, is for example configure to form a target of the rotational sensor 46, 48. Such a target forms for example a disk radially arranged around the torque transmission arrangement 24, the target being extending along an orthoradial and circular sensing direction.

As understood from the above, the stator 52 is for example not connected to the torque transmission arrangement, and the rotor is for example not connected to the fixed structure 26 of the high lift system.

A rotation of the torque transmission arrangement 24 relative to the fixed structure 26 at the first measurement point M1 corresponds for example to a rotation of the rotor 54 relative to the stator 52 of the first rotational sensor 46.

A rotation of the torque transmission arrangement 24 relative to the fixed structure 26 at the second measurement point M2 corresponds for example to a rotation of the rotor 54 relative to the stator 52 of the second rotational sensor 48.

For example, the stator 52 and the rotor 54 of each rotational sensor 46, 48 form together an inductive encoder. In such an inductive encoder, relative displacement of the rotor 54 relative to the stator 52 induces a change in a magnetic field sensed by the stator 54, which transcribes/corresponds to the relative displacement of the rotor 54 relative to the stator 52.

For example, each rotational sensor 46, 48 comprises at least one printed circuit board (abbreviated PCB, non-represented). The printed circuit board is for example configured for generating the first A1, respectively second A2, angular position based on respective position of the rotor 54 relative to the stator 52.

For example, at least one of the rotor 54 and stator 52 comprises a printed circuit board.

For example, the or each printed circuit board is configured to emit and/or sense a magnetic field, such that the sensor 46, 48 generates the first A1, respectively second A2. In an example, the sensor 46, 48, does not comprise any coil and relies on the printed circuit board for emitting and/or sensing the magnetic field.

As illustrated on figure 2, and as presented in more details later, the actuation control device 50 is connected to the first 46 and to the second 48 rotational sensors.

The actuation control device 50 comprises an acquisition module 56 and a determination module 58. The actuation control device 50 further comprises for example a control module 60 and/or a communication module 62.

In an example, and as presented in more details later in this description, the actuation control device 50 comprises a first circuitry C1 and a second circuitry C2, different from the first circuitry C1.

For example, at least one of the acquisition module 56 and of the determination module 58 is redundant and implemented on both the first C1 and the second circuitry C2.

In particular, in the example illustrated in figure 2, the acquisition module 56 the determination module 58, the control module 60 and the communication module 62 are redundant and implemented on both the first C1 and the second circuitry C2.

The acquisition module 56 is configured for acquiring the first angular position A1 from the first rotational sensor 46 and for acquiring the second angular position A2 from the second rotational sensor 48.

For example, and as above mentioned, the first A1 and/or second A2 angular position might include a number of rotations along with an angle formed between the torque transmission arrangement 24 and the fixed structure 26 and/or wing body 18.

In another example, and as above mentioned, the first A1 and/or second A2 measured angular position only include the angle formed between the torque transmission arrangement 24 and the fixed structure 26 and/or wing body 18. For example, and for such another example, the acquisition module 56 is configured for determining a number of rotations from the measured first A1 and second A2 angular positions, for example by integrating the variation of the first A1 and second A2 angular positions over time.

In such an example, the acquired first angular position A1 includes such determined number of rotations of the torque transmission arrangement 24 at the first measurement point M1 and the acquired second angular position A2 includes such determined number of rotations of the torque transmission arrangement 24 at the second measurement point M2.

For better readability, the acquired and measured angular positions are both noted A1, A2, but one understands that in such an example, the finally acquired angular position differs from the initially acquired measured angular position in that it also includes the determined number of rotations. In other words, the acquisition module 56 preprocesses a raw acquired measured angular position into a processed acquired angular position, by including the number of rotations to the raw acquired measured angular position.

The determination module 58 is configured for determining a torque T applied to a torque transmission arrangement 24 as a function of the acquired first A1 and second A2 angular positions.

The determination module 58 is further for example configured for determining the torque T applied to the torque transmission arrangement 24 as a function of the distance D between the first measurement point M1 and the second measurement point M2.

For example, the distance D between the first M1 and second M2 measurement point is stored and/or communicated to the determination module 58, such that the determination module 58 determines the torque T applied to the torque transmission arrangement 24 as a function of the distance D between the first measurement point M1 and the second measurement point M2.

The determination module 58 is further for example configured for determining the torque T applied to the torque transmission arrangement 24 as a function of parameters of the torque transmission arrangement 24 that are for example stored and/or communicated to the determination module 58. Such parameters comprise for example the torsional stiffness of the torque transmission arrangement 24 and/or material and/or geometrical parameters of the torque transmission arrangement 24.

In examples such as presented in figure 3B, the determination module 58 is further for example configured for determining the torque T applied to the torque transmission arrangement 24 as a function of parameters of the gear arrangement 44, such as for example its gear ratio or its friction values.

The determination module 58 is for example configured to derive the torque T applied to the torque transmission arrangement 24 by comparing the first A1 and the second A2 acquired angular positions.

For example, the determination module 58 if configured for storing correspondence tables, in which torque values are assigned for each result of the comparison of the first A1 and the second A2 acquired angular positions.

The determination module 58 is for example further for example configured to determining a consolidated angular position AC of the torque transmission arrangement 24 based on the first A1 and/or second A2 acquired angular position.

To that end, the determination module 58 is for example configured for fusing the values of the first A1 and second A2 acquired angular positions into the consolidated angular position AC. For example, the determination module 58 is configured for excluding apparent erroneous first A1 or second A2 acquired angular positions for determining the consolidated angular position AC.

In an example, the consolidated angular position AC is based on an average of the first A1 and second A2 acquired angular positions.

As illustrated on figure 2, the control module 60 is connected to the blocking element 25 of the high lift system 16.

The control module 60 is configured for controlling the blocking element 25 to block the torque transmission arrangement 24 depending on the determined torque T, that is, on the torque determined by the determination module 58.

For example, in an example where the blocking element 25 is a Power Off Brake, the control module 60 is configured for stopping an energy supply to the blocking element 25 depending on the determined torque T.

The control module 60 is for example configure for controlling the blocking element 25 to block the torque transmission arrangement 24 if the determined torque T is above a predetermined upper threshold.

The communication module 62 is for example configured for being connected to the human machine interface 15 and/or to the flight control computer 17.

The communication module 62 is for example configured for transmitting the determined torque T to the human machine interface 15 and/or flight control computer 17.

In an example, the communication module 62 is further configured for transmitting the consolidated angular position AC to the human machine interface 15 and/or flight control computer 17.

In an example, the communication module 62 is further configured for transmitting a blocking status BS to the human machine interface 15 and/or flight control computer 17. The blocking status BS is for example representative of a blocking of torque transmission arrangement 24 by the blocking element 25, which, as presented above, depends for example from the determined torque T.

In the example of figure 2, the acquisition module 56 the determination module 58, the control module 60 and/or the communication module 62 are each implemented as analog signal processing devices and as presented above, each of these devices is redundant and implemented on each of the first C1 and second C2 circuits.

In a variant (not shown), the acquisition module 56 the determination module 58, the control module 60 and/or the communication module 62 are each produced in the form of a programmable logic components, such as a FPGA (Field Programmable Gate Array), or in the form of a dedicated integrated circuit, such as an ASIC (Application Specific Integrated Circuit), or in the form of any combination of ASIC, FPGA and/or software.

In a further non illustrated example, the actuation control device 50 is formed as an information processing unit (non-represented) comprising, for example, a memory associated with a processor (non-represented).

In such an example, the acquisition module 56 the determination module 58, the control module 60 and the communication module 62 are each produced in the form of software executable by the processor. The memory is then able to store an acquisition software, designed for acquiring the measured first angular position A1 from the first rotational sensor 46 and the measured second angular A2 position from the second rotational sensor 48, a determination software, designed for determining a torque T applied to the torque transmission arrangement 24 as a function of the acquired first A1 and second A2 angular positions, a control software, designed for controlling the blocking element 25 to block the torque transmission arrangement 24 depending on the determined torque T, and a communication software, designed for transmitting the determined torque T to the human machine interface 15 and/or flight control computer 17.

The processor of the information processing unit is then able to execute the acquisition software, the determination software, the control software and the communication software.

When the actuation control device 50 is made in the form of one or several software programs, i.e., in the form of a computer program, it is further able to be stored on a medium, not shown, readable by computer. The computer-readable medium is for example a medium suitable for storing electronic instructions and able to be coupled with a bus of a computer system. As an example, the readable medium is an optical disc, a magnetic-optical disc, a ROM memory, a RAM memory, any type of non-volatile memory (for example, EPROM, EEPROM, FLASH, NVRAM), a magnetic card or an optical card. A computer program including software instructions is then stored on the readable medium.

A method of monitoring a high lift system 16 with a high lift system architecture 22 as above described will now be presented.

In an acquiring step, a first angular position A1 of the torque transmission arrangement 24, taken at a first measurement point M1, is acquired from the first rotational sensor 46 of the high lift system architecture 22. For example, the acquisition module 56 is acquiring such a first angular position A1 of the torque transmission arrangement 24.

In another acquiring step, for example before, parallelly, or after the previously described acquiring step, a second angular position A2 of the torque transmission arrangement 24, taken at a second measurement point M2, is acquired from the second rotational sensor 48 of the high lift system architecture 22. For example, the acquisition module 56 is acquiring such a second angular position A2 of the torque transmission arrangement 24.

In a determining step, a torque T applied to the torque transmission arrangement 24 is determined as a function of the acquired first A1 and second A2 angular position. For example, the determination module 60 determines such a torque T applied to the torque transmission arrangement 24.

As above mentioned, the use of a first 46 and second rotational sensors 48 in combination with the above presented determination module 50 is especially advantageous since it allows for a versatile and accurate architecture 22.

The determination of the torque T as a function of a distance D between the first measurement point M1 and the second measurement point M2, and especially a distance D as above presented, ensures accuracy of the determined torque T.

The use of sensors 46, 48 comprising a stator 52 and a rotor 54 is especially advantageous for minimizing the spatial footprint of the high lift system architecture 22.

The use of first A1 and second A2 angular position including the number of rotations of the torque transmission arrangement 24 is especially advantageous for allowing the integration of the architecture on rotating torque transmission arrangements 24, i.e. torque transmission arrangements 24 which may complete more than one rotation when operated.

The use of separate and different circuitry C1, C2 for implementing at least one of the acquisition module 56 and the determination module 58 is especially relevant for ensuring reliability of the determined torque T. This can further allow the use of precise sensors 46, 38 relying on PCB without compromising safety.

The use of a control module 60 configured for controlling the blocking element 25 and/or of a communication module 62 configured for transmitting the determined torque T to the human machine interface 15 and/or flight control computer 17, is especially advantageous to ensure that the high lift system 16 is in a safe configuration when the value of the determined torque T is non nominal.

Having the first and second rotational sensors installed on a transmission shaft 36 is especially advantageous for directly and precisely monitoring the torque T transmitted by such a shaft 36.

Having one of a first 46 and second 48 rotational sensors being installed on an input shaft 40 and another of the first 46 and second 48 rotational sensors being installed on an output shaft 48 is especially advantageous to evaluate the torque transmitted through a gear arrangement 44, and for example through an actuator 28.

### REFERENCE SIGNS:

- 10: aircraft
- 12: fuselage
- 14: wings
- 15: human machine interface
- 16: high lift system
- 17: flight control computer
- 18: wing body
- 20: moveable surface
- 22: high lift system architecture
- 24: torque transmission arrangement
- 25: blocking element
- 26: fixed structure
- 28: actuator
- 30: housing
- 32: rotary element
- 34: traveling nut
- 36: transmission shaft
- 38: support stations
- 40: input shaft
- 42: output shaft
- 44: gear arrangement
- 46: first rotational sensor
- 48: second rotational sensor
- 50: actuation control device
- 52: stator
- 54: rotor
- 56: acquisition module
- 58: determination module
- 60: control module
- 62: communication module
- AC: consolidated angular position
- BS: blocking status
- C1: first circuitry
- C2: second circuitry
- T: torque
- A: angular position
- M: measurement point
- A1: first angular position
- A2: second angular position
- M1: first measurement point
- M2: second measurement point
- D: distance between first and second measurement point

## Claims

1. High lift system architecture (22), comprising:
- a first rotational sensor (46), configured to be installed on a torque transmission arrangement (24) and to measure a first angular position (A1) of the torque transmission arrangement (24), at a first measurement point (M1);
- a second rotational sensor (48), configured to be installed on the torque transmission arrangement (24) and to measure a second angular position (A2) of the torque transmission arrangement (24), at a second measurement point (M2); and
- an actuation control device (50), connected to the first (46) and second (48) rotational sensors, the actuation control device (50) comprising:
+ an acquisition module (56), configured for acquiring the first angular position (A1) from the first rotational sensor (46) and the second angular position (A2) from the second rotational sensor (48), and
+ a determination module (58), configured for determining a torque (T) applied to the torque transmission arrangement (24) as a function of said acquired first (A1) and second (A2) angular positions.

2. High lift system architecture (22) according to claim 1, wherein the determination module (58) is further configured for determining the torque (T) applied to the torque transmission arrangement (24) as a function of a distance (D) between the first measurement point (M1) and the second measurement point (M2).

3. High lift system architecture (22) according to claim 1 or 2, wherein a distance (D) between the first measurement point (M1) and the second measurement point (M2) is comprised between 0.01 m and 2 m.

4. High lift system architecture (22) according to any of the preceding claims, wherein each of the first (46) and second (48) rotational sensor comprises:
- a stator (52), configured for being fastened to a fixed structure (26) of the high lift system (16); and
- a rotor (54), facing the stator (52) and configured for being fastened to the torque transmission arrangement (24).

5. High lift system architecture (22) according to any of the preceding claims, wherein the determination module (58) is further configured for determining a consolidated angular position (AC) of the torque transmission arrangement (24) based on the first (A1) and/or second (A2) acquired angular position.

6. High lift system architecture (22) according to any of the preceding claims, wherein the acquisition module (56) is configured for determining a number of rotations from the measured first (A1) and second (A2) angular positions, the acquired first angular position (A1) including the number of rotations of the torque transmission arrangement (24) at the first measurement point (M1) and the acquired second angular position (A2) including the number of rotations of the torque transmission arrangement (24) at the second measurement point (M2).

7. High lift system architecture (22) according to any of the preceding claims, wherein the actuation control device (50) comprises a first circuitry (C1) and a second circuitry (C2), different from the first circuitry (C1), at least one of the acquisition module (56) and the determination module (58) being redundant and implemented on both the first (C1) and the second (C2) circuitry.

8. High lift system architecture (22) according to any of the preceding claims, wherein the actuation control device (50) further comprises a control module (60), configured to be connected to a blocking element (25) of the high lift system (16), the control module (60) being configured for controlling the blocking element (25) to block the torque transmission arrangement (24) depending on the determined torque (T).

9. High lift system architecture (22) according to any of the preceding claims, wherein the high lift system (16) further comprises a communication module (62), configured to be connected to human machine interface (15) and/or a flight control computer (17), the communication module (62) being configured for transmitting the determined torque (T) to the human machine interface (15) and/or flight control computer (17).

10. High lift system (16) for an aircraft (10), comprising a torque transmission arrangement (24) and a high lift system architecture (22) according to any of the claims 1 to 9, wherein the first (46) and second (48) rotational sensors are installed on the torque transmission arrangement (24).

11. High lift system (16) according to claim 10, wherein the torque transmission arrangement (24) comprises a transmission shaft (36), both the first (46) and second (48) rotational sensors being installed on the transmission shaft (36).

12. High system (16) according to claim 10, wherein the torque transmission arrangement (24) comprises an input shaft (40), an output shaft (42) and a gear arrangement (44), cinematically connecting the input shaft (40) and the output shaft (42), one of the first (46) and second (48) rotational sensors being installed on the input shaft (40) and the other of the first (46) and second (48) rotational sensors being installed on the output shaft (42).

13. Aircraft (10) comprising a high lift system (16) according to any of the claims 10 to 12.

14. Method of monitoring a high lift system (16) with a high lift system architecture (22) according to any of the claims 1 to 9, wherein the method comprises the steps of:
- acquiring a first angular position (A1) of the torque transmission arrangement (24) from the first rotational sensor (46) of the high lift system architecture (22);
- acquiring a second angular position (A2) of the torque transmission arrangement (24) from the second rotational sensor (48) of the high lift system architecture (22); and
- determining a torque (T) applied to the torque transmission arrangement (24) as a function of the acquired first (A1) and second (A2) angular positions.
